# EUROPÄISCHE PATENTSCHRIFT

(11) **EP 1 412 157 B1**
(45) Veröffentlichungstag und Bekanntmachung des Hinweises auf die Patenterteilung: **09.02.2005**
(21) Anmeldenummer: 02764718.9
(22) Anmeldetag: 18.07.2002
(51) Int. Cl.: B29C 45/50, B29C 45/77

(54) **REGELVERFAHREN FÜR EINE SPRITZGIESSMASCHINE**
CONTROL METHOD FOR AN INJECTION MOLDING MACHINE
PROCEDE DE REGULATION POUR UNE PRESSE D'INJECTION

(30) Priorität: 20.07.2001 DE 10135539
(43) Veröffentlichungstag der Anmeldung: 28.04.2004
(73) Patentinhaber: Mannesmann Plastics Machinery GmbH, 80997 München (DE)
(72) Erfinder: MELKUS, Andreas, A-5110 Oberndorf (AT)
(74) Vertreter: Zollner, Richard, Dipl.-Phys.
(86) Internationale Anmeldenummer: PCT/EP2002/007984
(87) Internationale Veröffentlichungsnummer: WO 2003/009987

(56) Entgegenhaltungen:
- EP-A- 0 968 808
- EP-A- 1 211 043
- WO-A-01/89799
- DE-A- 4 344 335

## Beschreibung

Die Erfindung bezieht sich auf ein Verfahren zum Regeln des Staudrucks in einer Spritzgießmaschine mit einem Einspritzaggregat gemäß dem Oberbegriff des Anspruchs 1.

Ein Verfahren zum Regeln des Staudrucks in einer Spritzgießmaschine mit einem Einspritzaggregat mit einem ersten Motor zum axialen Verschieben einer Plastifizierschnecke und einem zweiten Motor zum Drehen der Schnecke, wobei beide Motoren über eine gemeinsame Welle auf die Schnecke einwirken ist beispielsweise aus der DE 43 44 335 C2 bekannt, wobei aber keine Aussagen über die Regelung eines solchen Aggregates gemacht werden.

Ein Verfahren zum Steuern einer Spritzgießmaschine ist aus der EP 0 528 040 B1 bekannt. In dieser Schrift ist angegeben, dass beispielsweise der Einspritzvorgang oder auch die Staudruckregelung über eine Drehmomentbegrenzung des Einspritzmotors, d.h. des Motors, der die Schnecke axial verschiebt, vorgenommen werden kann. Desweiteren wird hier vorgeschlagen, eine Lageregelung vorzunehmen, d.h. die Lage der Schnecke abhängig von einer Soll-Ist-Wert-Differenz für den Staudruck zu verändern. Dieses Regelverfahren ist jedoch bei der eingangs angegebenen Anordnung nicht sinnvoll einzusetzen.

Weiterhin ist aus der nachveröffentlichten EP-A- 1 211 043 ein gattungsgemäßes Verfahren zum Betreiben eines Einspritzaggregates bekannt, bei dem zwei Elektromotore zum Einspritzen des thermoplastischen Material in ihrer Drehrichtung gegenläufig betrieben werden oder die beiden Elektromotore zur Erzeugung eines Staudruckes in der Schmelze oder eines Nachdruckes auf die Schmelze in ihrer Drehrichtung gleichläufig betrieben werden, wobei mittels mindestens eines elektrischen Feedbacksignals eine Differenzdrehzahl eingestellt wird.

In der ebenfalls nachveröffentlichten WO 01/89799 ist ein Einspritzaggregat für eine Kunststoffspritzgießmaschine beschrieben, welches eine Schnecke mit einem ersten und einem zweiten Antriebselement umfasst. Eine Bewegungsspindel ist als erstes Antriebselement ausgebildet, über welche die Schnecke zum Plastifizieren drehend antreibbar und zum Einspritzen in axialer Richtung verfahrbar ist. Eine Spindelmutter ist als zweites Antriebselement ausgebildet, das mit der Bewegungsspindel über ein Bewegungsgewinde gekoppelt ist. Überdies ist ein gestellfest angeordneter Elektromotor vorgesehen, von dem - während ein Antriebselement gegen eine Drehung gehalten ist - das andere Antriebselement zum Verfahren der Schnecke beim Einspritzen drehend antreibbar ist. Dabei wird eine Drehzahl des einen Antriebselements vorgegeben, die unterschiedlich zu der Drehzahl ist, mit der gleichzeitig der große Elektromotor des anderen Antriebsmittel angetrieben wird.

Die EP 0 968 808 A2 beschreibt eine Staudruckregelung, bei welcher der Staudruck in Abhängigkeit von einer Schneckenposition, einer Staudruckvorgabe und eines Ist-Staudruckes geregelt wird.

Der Erfindung liegt die Aufgabe zugrunde, ein Regelverfahren für den Staudruck in einer Spritzgießmaschine mit dem eingangs genannten Aufbau für ein Einspritzaggregat anzugeben.

Die Lösung dieser Aufgabe erfolgt durch ein Verfahren mit den Merkmalen des Patentanspruchs 1; der abhängige Patentanspruch betrifft eine vorteilhafte Weiterentwicklung der Erfindung.

Bei dem zugrundeliegenden Aufbau wirken beide Motoren auf eine gemeinsame Welle zum Antrieb der Schnecke, und erfindungsgemäß wird vorgeschlagen, zur Regelung des Staudrucks eine Drehzahldifferenz zwischen den Drehzahlen der Motoren zu verändern.

Erfindungsgemäß wird in einem Regelkreis ein Vorgabewert für die Drehzahl eines Motors (Dosiermotor) ermittelt, und dieser Wert wird einem weiteren Regelkreis für den anderen Motor (Einspritzmotor) als Sollwertvorgabe zugeführt. Vorzugsweise wird dann aus einer Soll-Ist-Differenz für den Staudruck eine Drehzahldifferenz ermittelt, die der Sollwertvorgabe addiert wird und zur Ansteuerung des Einspritzmotors dient.

Erfindungsgemäß werden somit beide Motoren (Dosier- und Einspritzmotor) zunächst mit gleicher Drehzahl angesteuert, was einen Staudruck von Null ergäbe. Der eigentliche Staudruckwert laut Sollvorgabe wird durch die Drehzahldifferenz der beiden Motoren realisiert. Durch diese zusätzlichen regelungstechnischen Maßnahmen ist das System sehr dynamisch und hoch genau und führt zu einer optimalen Staudruckregelung.

Ein Ausführungsbeispiel der Erfindung wird anhand der beigefügten Zeichnungen erläutert. Es zeigen:
- Fig. 1: den mechanischen Aufbau des Einspritzaggregates und
- Fig. 2: ein Regelschema.

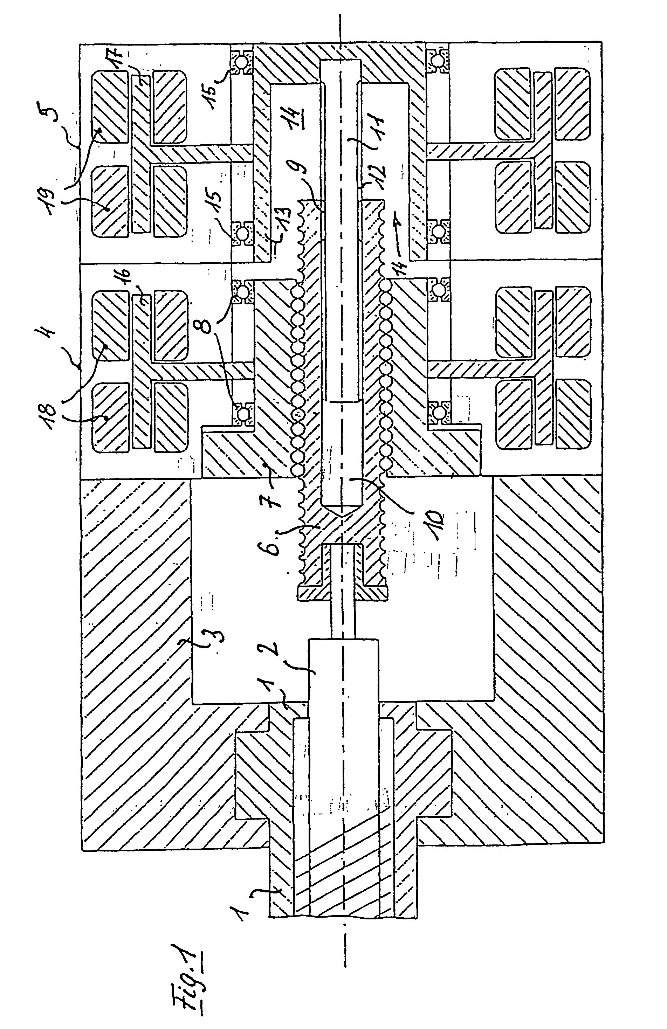

Figur 1 zeigt den an sich bekannten Aufbau der rückwärtigen Teilstücke des Einspritzaggregates gemäß DE 43 44 335 C2 mit einem Schneckenzylinder 1 und einer darin gelagerten Schnecke 2 einer ansonsten nicht näher dargestellten Spritzgießmaschine. Der Schneckenzylinder 1 ist in einem Gehäuse 3 angeordnet, an dem ein erster 4 und ein zweiter Hohlwellenmotor 5 befestigt sind. Die Schnecke 2 ist mit einer Bewegungsspindel 6 fest verbunden, die in einer Spindelmutter 7 geführt ist. Es handelt sich hierbei um einen Kugelspindelantrieb. Die Spindelmutter 7 ist die Hohlwelle des ersten Hohlwellenmotors 4, die mittels einer Axiallagerung 8 direkt im Motorgehäuse abgestützt ist.

In eine mit Axialnuten 9 versehene Ausnehmung 10 der Bewegungsspindel 6 ragt ein Antriebszapfen 11, der ebenfalls mit Axialnuten 12 versehen ist und somit mit der Bewegungsspindel 6 drehbar aber axialverschiebbar gekoppelt ist. Der Antriebszapfen 11 ist mit der Hohlwelle 13 des zweiten Hohlwellenmotors 5 fest verbunden, die den Antriebszapfen 11 unter Freilassung eines Regenraums 14 umgibt. Die Hohlwelle 13 ist mittels einer Axiallagerung 15 direkt im Motorgehäuse abgestützt.

Die Hohlwellenmotoren 4 und 5 sind transversale Flußmotoren mit zylindrischen Magneten 16 und 17, die jeweils beidseitig von Wicklungen 18 und 19 umgeben sind.

Im Betrieb führt die Schnecke 2 prinzipiell zwei Bewegungen aus. Beim Einspritzen wird die Schnecke axial nach vorne geschoben und rotiert nicht. Beim Plastifizieren rotiert die Schnecke 2 und wird durch das aufplastifizierte und in den Schneckenvorraum (nicht dargestellt) gefördertes Material axial nach hinten geschoben. Dabei wird eine definierte Gegenkraft (Staudruck) aufgebracht.

Beim Einspritzen dreht der erste Hohlwellenmotor 4 die Spindelmutter 7, und die Schnecke 2 wird axial (in Fig. 1 nach links) verschoben. Der zweite Hohlwellenmotor 5 bleibt drehfest.

Beim Plastifizieren dreht der zweite Hohlwellenmotor 5 die Schnecke 2 über den Antriebszapfen 11 mit der erforderlichen Plastifizierdrehzahl. Dabei sollte der erste Hohlwellenmotor 4 mit annähernd der gleichen Drehzahl wie der zweite Hohlwellenmotor 5 drehen, wobei sich aus der Drehzahldifferenz die Rücklaufgeschwindigkeit der Schnecke 2 ergibt.

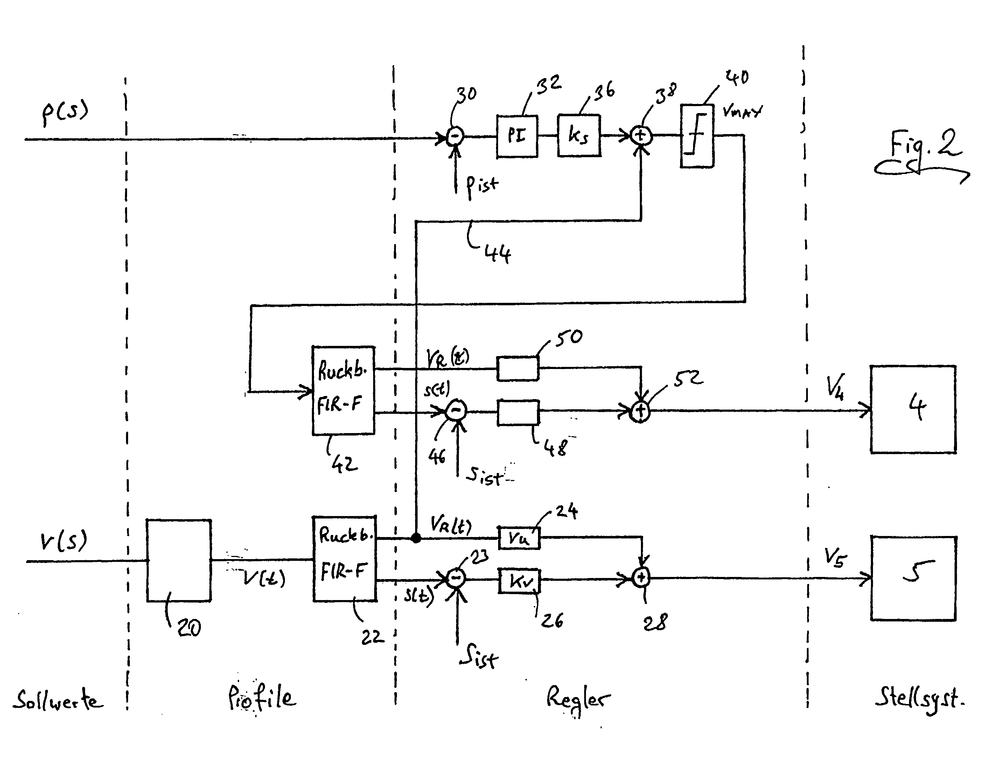

Bei dem bekannten mechanischen Aufbau wird das in Figur 2 schematisch dargestellte Regelsystem verwendet. Dabei werden einem ersten Regelkreis Geschwindigkeitssollwerte v(s) (beziehungsweise Drehzahlsollwerte) vorgegeben, die in einem Profilglied 20 in zeitabhängige Geschwindigkeitsdaten (bzw. Drehzahldaten) v(t) gewandelt werden. Diese Daten werden in einem Ruckbegrenzer bzw. Filterglied 22 in ruckbegrenzte Geschwindigkeit bzw. Drehzahldaten v_{R}(t) und in geschwindigkeitsabhängige Positionsdaten (s(t)) gewandelt. Diese Positionsdaten werden einem Subtraktionsglied 23 zusammen mit Ist-Positionsdaten zugeführt und nach einer Multiplikation mit einer Konstanten in einem Multiplikationsglied 26 einem Addierer 28.

Die zeitabhängigen Geschwindigkeits- bzw. Drehzahldaten werden, ggf. nach einer Multiplikation in einem Multiplikationsglied 24, ebenfalls dem Addierer 28 zugeführt. Der Ausgang des Addierers 28 liefert das Geschwindigkeits- bzw. Drehzahlsignal v₅ für den Umrichter (nicht dargestellt) des Motors 5.

In einem zweiten Steuer- bzw. Regelkreis werden positionsabhängige Druckdaten p(s) vorgegeben und einem Subtraktionsglied 30 zugeführt. Von diesen Daten wird im Subtraktionsglied 30 der aktuelle Druckwert pᵢₛₜ abgezogen, und das Ergebnis wird über ein PI-Glied 24 und ein Konstanten-Multiplikationsglied 36 einem Addierer 38 zugeführt. Die Ausgabe des Addierers 38 wird einem Begrenzungsglied 40 zugeführt, in dem die Ausgabe des Addierers 38 auf den Maximalwert vₘₐₓ, der für eine Geschwindigkeit- bzw. Drehzahl zulässig ist, begrenzt wird. Die daran anschließende Struktur des Regelkreises entspricht dem ersten Steuer- bzw. Regelkreis, und die Elemente 42, 46, 48, 50 und 52 entsprechen den Elementen 22, 23, 24, 26 und 28 des ersten Regelkreises. Der Ausgang des zweiten Regelkreises liefert mit v₄ das Geschwindigkeits- bzw. Drehzahlsignal zur Ansteuerung des Umrichters (nicht dargestellt) des Motors 4.

Erfindungsgemäß sind die beiden oben dargestellten Steuer- bzw. Regelkreise miteinander gekoppelt, und zwar über einen Zweig 44, der das zeitabhängige Geschwindigkeits- bzw. Drehzahlsignal des Regelkreises für den Motor 5 als Geschwindigkeits- bzw. Drehzahlvorgabewert 44 dem Addierer 38 des Regelkreises für den Motor 4 zuführt. Somit erhalten beide Motoren zunächst den gleichen Vorgabewert für die Drehzahl, und in den Gliedern 30, 32 und 36 wird die für einen Druckvorgabewert erforderliche Drehzahldifferenz ermittelt und dem Drehzahlvorgabewert im Addierer 38 aufaddiert.

## Patentansprüche

1. Verfahren zum Regeln des Staudrucks in einer Spritzgießmaschine mit einem ersten Motor (4), der mit einer ersten Drehzahl dreht, zum Verschieben einer Schnecke (2) in Axialrichtung und einem zweiten Motor (5), der mit einer zweiten Drehzahl dreht, zum Drehen der Schnecke (2), wobei der erste und der zweite Motor (4, 5) auf eine gemeinsame Welle (6) wirken und man zur Änderung des Staudrucks die Differenz der Drehzahlen (v4, v5) der Motoren ändert,
**dadurch gekennzeichnet,**
**dass** mit einem ersten Regelkreis die Drehzahl des ersten Motors (4) bestimmt wird und mit einem zweiten Regelkreis die Drehzahl des zweiten Motors (5) bestimmt wird, wobei ein Drehzahlwert (v_{R}) des zweiten Regelkreises als Drehzahl-Vorgabewert dem ersten Regelkreis vorgegeben wird.

2. Verfahren nach Anspruch 1,
**dadurch gekennzeichnet,**
**dass** man in dem ersten Regelkreis eine Soll-Ist-Differenz für den Staudruck ermittelt, davon abhängig eine Drehzahldifferenz ermittelt und zu der Drehzahldifferenz den Vorgabewert aus dem zweiten Regelkreis addiert.

## Claims

1. A method for regulating the dynamic pressure in an injection moulding machine comprising a first motor (4), which rotates at a first speed, for the displacement of a worm (2) in the axial direction, and a second motor (5), which rotates at a second speed, for the rotation of the worm (2), whereby the first and the second motor (4, 5) act on a common shaft (6) and the difference in the speeds (v4, v5) of the motors is altered to change the dynamic pressure,
**characterised in that** the speed of the first motor (4) is determined with a first control loop and the speed of the second motor (5) is determined with a second control loop, a speed value (V_{R}) of the second control loop being preset as the speed default value for the first control loop.

2. A method according to Claim 1,
**characterised in that** a variance difference for the dynamic pressure is determined in the first control loop, a speed difference is determined as a function thereof and the default value from the second control loop is added to the speed difference.

## Revendications

1. Procédé de réglage de la contre-pression dans une machine à mouler par injection avec un premier moteur (4) qui tourne à une première vitesse de rotation pour déplacer une vis (2) dans le sens axial et un deuxième moteur (5) qui tourne à une deuxième vitesse de rotation pour faire tourner la vis (2), le premier et le deuxième moteur (4, 5) agissant sur un arbre commun (6) et la différence des vitesses de rotation (v4, v5) des moteurs étant modifiée pour modifier la contre-pression, **caractérisé en ce que** la vitesse de rotation du premier moteur (4) est déterminée avec un premier circuit de réglage et la vitesse de rotation du deuxième moteur (5) avec un deuxième circuit de réglage, une valeur de vitesse de rotation (v_{R}) du deuxième circuit de réglage étant prescrite comme valeur de référence de vitesse de rotation au premier circuit de réglage.

2. Procédé selon la revendication 1, **caractérisé en ce que** l'on détermine dans le premier circuit de réglage une différence valeur de consigne/valeur effective pour la contre-pression, **en ce qu'**une différence de vitesse de rotation est déterminée en fonction de cela et **en ce qu'**on ajoute la valeur de référence issue du deuxième circuit de réglage à la différence de vitesse de rotation.
